# EUROPÄISCHE PATENTANMELDUNG

(11) **EP 3 533 664 A1**
(43) Veröffentlichungstag der Anmeldung: **04.09.2019**
(21) Anmeldenummer: 19160206.9
(22) Anmeldetag: 01.03.2019
(51) Int. Cl.: B60N 2/06, B64D 11/06

(54) **LÄNGSEINSTELLVORRICHTUNG FÜR EINEN SITZ, INSBESONDERE FLUGZEUGSITZ, SOWIE SITZ**

(30) Priorität: 02.03.2018 DE 102018203195
(71) Anmelder: Adient Aerospace LLC, Kirkland, WA 98033 (US)
(72) Erfinder: SCHÄFER, Markus, 67661 Kaiserslautern (DE)
(74) Vertreter: Liedtke & Partner Patentanwälte

(57) **Zusammenfassung**

Die Erfindung betrifft eine Längseinstellvorrichtung (50) für einen Sitz (1), insbesondere Flugzeugsitz, umfassend
- wenigstens eine Schienenanordnung (100) mit einer ersten Sitzschiene (110) und
- einer relativ zu der ersten Sitzschiene (110) verschiebbar gelagerten zweiten Sitzschiene (120),
wobei die erste Sitzschiene (110) und zweite Sitzschiene (120) jeweils ein Zahnelement (ZE) mit einer Verzahnung (116, 126) aufweisen, die über zumindest ein antreibbares Ritzel (154) relativ zueinander beweglich gekoppelt sind,
wobei zumindest eines der Zahnelemente (ZE) mit einem Spiel (S), das senkrecht zur Längsrichtung (X) verläuft, mit der zugehörigen ersten oder zweiten Sitzschiene (110, 120) verbunden ist. Des Weiteren betrifft die Erfindung eine weitere Längseinstellvorrichtung (50') und einen Sitz (1).

## Beschreibung

Die Erfindung betrifft eine Längseinstellvorrichtung für einen Sitz, insbesondere einen Flugzeugsitz. Des Weiteren betrifft die Erfindung einen Sitz, insbesondere einen Flugzeugsitz.

Aus der EP 1 571 034 A2 ist ein Längseinsteller für einen Fahrzeugsitz bekannt, mit einer Sitzschienenanordnung, die zwei Sitzschienen umfasst, welche einen Bauraum definieren und motorisch angetrieben relativ zueinander verschiebbar sind, wofür innerhalb des Bauraums eine erste Spindel angeordnet ist, die mit einer ersten Spindelmutter zusammenwirkt, wobei der Bauraum Platz für eine zweite Spindel mit einer zweiten Spindelmutter bietet. Dadurch steht eine modular aufgebaute Sitzschienenanordnung zur Verfügung, welche mittels der Anzahl der Spindeln an die erforderliche Längsverriegelungskraft angepasst werden kann. Bei niedrigeren Lastanforderungen ist nur eine Spindel eingesetzt, bei höheren Lastanforderungen zwei Spindeln.

Aufgabe der vorliegenden Erfindung ist es, eine Längseinstellvorrichtung für einen Sitz, insbesondere Flugzeugsitz weitgehend klemmfrei und geräuscharm bereitzustellen.

Hinsichtlich der Längseinstellvorrichtung für einen Sitz wird die Aufgabe durch die im Anspruch 1 angegebenen Merkmale gelöst. Hinsichtlich einer weiteren Ausführungsform der Längseinstellvorrichtung für einen Sitz wird die Aufgabe durch die im Anspruch 2 angegebenen Merkmale gelöst.

Hinsichtlich des Sitzes wird die Aufgabe durch die im Anspruch 10 angegebenen Merkmale gelöst.

Die Längseinstellvorrichtung umfasst wenigstens eine Schienenanordnung mit einer ersten Sitzschiene und einer relativ zu der ersten Sitzschiene verschiebbar gelagerten zweiten Sitzschiene, wobei die erste Sitzschiene und zweite Sitzschiene jeweils ein Zahnelement mit einer Verzahnung aufweisen, die über zumindest ein antreibbares Ritzel relativ zueinander beweglich, insbesondere verschiebbar, gekoppelt sind. Dabei ist zumindest eines der Zahnelemente mit einem Spiel, das senkrecht zur Verstellrichtung verläuft, mit der zugehörigen ersten oder zweiten Sitzschiene verbunden. Insbesondere ist das zumindest eine Zahnelement an der zugehörigen ersten oder zweiten Sitzschiene relativ zu dieser beweglich befestigt.

In einer Weiterbildung bilden die Sitzschienen ein Schienenprofil mit einem Innenraum, in welchem das jeweilige Zahnelement und das Ritzel angeordnet sind.

In einer weiteren Ausführungsform ist das Ritzel an der zweiten Sitzschiene gelagert. Eine Drehung des Ritzels bewirkt eine Längsverstellung der zweiten Sitzschiene relativ zu der ersten Sitzschiene. Mit anderen Worten: eine Drehung des Ritzels bewirkt eine Verschiebung der zweiten Sitzschiene relativ zu der ersten Sitzschiene in Längsrichtung. Die erste Sitzschiene ist fahrzeugseitig befestigt und die zweite Sitzschiene ist sitzseitig befestigt.

Die mit der Erfindung erzielten Vorteile bestehen insbesondere darin, dass die Sitzschienen weitgehend geräuscharm und sicher, insbesondere klemmfrei zueinander verstellt werden können. Insbesondere muss ein Abstand zwischen den Zahnelementen und dem Ritzel weitestgehend genau sein, um Verklemmungen und Geräusche zu vermeiden. Mittels des Spiels können Fertigungstoleranzen zwischen dem jeweiligen Zahnelement und dem Ritzel sowie der Sitzschienen selbst in einfacher und kostengünstiger Weise ausgeglichen werden. Zumindest eines der Zahnelemente ist mittels des Spiels relativ zu dem anderen Zahnelement und dem Ritzel in Vertikalrichtung beweglich ausgebildet. Beispielsweise ist das Abstandselement ausgebildet, das Zahnelement in Vertikalrichtung jeweils in Richtung des anderen Zahnelements und gegen das Ritzel zu drücken. Bei unterschiedlichen Fertigungstoleranzen ist das Abstandselement ausgebildet, nachzugeben, sodass das Zahnelement in Richtung der zugehörigen Sitzschiene und im Rahmen des Spiels bewegt wird. Dadurch sind Fertigungstoleranzen ausgleichbar. Zudem ist eine Integration der vorliegenden Erfindung in bereits bestehenden und verwendeten Schienenanordnungen möglich.

In einer Weiterbildung einer Längseinstellvorrichtung umfasst die Längseinstellvorrichtung wenigstens eine Schienenanordnung mit einer ersten Sitzschiene, einer relativ zu der ersten Sitzschiene verschiebbar gelagerten und in Vertikalrichtung zu dieser beabstandeten zweiten Sitzschiene und einem zwischen der ersten und zweiten Sitzschiene angeordneten Schlitten, wobei die erste Sitzschiene und zweite Sitzschiene jeweils ein Zahnelement mit einer Verzahnung aufweisen, die über ein antreibbares Ritzel relativ zueinander beweglich, insbesondere verschiebbar, gekoppelt sind. Dabei ist zumindest eines der Zahnelemente mit einem Spiel, das senkrecht zur Verstellrichtung verläuft, mit der zugehörigen ersten oder zweiten Sitzschiene verbunden. Insbesondere ist das zumindest eine Zahnelement an der zugehörigen ersten oder zweiten Sitzschiene relativ zu dieser beweglich befestigt. Beispielsweise muss ein Abstand zwischen den Zahnelementen und dem Ritzel weitestgehend genau sein, um Verklemmungen und Geräusche zu vermeiden. Mittels des Spiels können Fertigungstoleranzen zwischen dem jeweiligen Zahnelement und dem Ritzel sowie der Sitzschienen selbst in einfacher und kostengünstiger Weise ausgeglichen werden. Zumindest eines der Zahnelemente ist mittels des Spiels relativ zu dem anderen Zahnelement und dem Ritzel in Vertikalrichtung beweglich ausgebildet. In einer Weiterbildung sind die beiden Sitzschienen spiegelsymmetrisch zu einer senkrecht zur Vertikalrichtung verlaufenden Spiegelebene ausgebildet. Beispielsweise sind die Sitzschienen als Gleichteile ausgebildet. Eine Herstellung und Montage der Sitzschienen ist jeweils dadurch vereinfacht.

Beispielsweise dient der Schlitten zur Stabilisierung der Sitzschienen und zur Verteilung von vertikalen Krafteinwirkungen, die auf die Zahnelemente und auf das Ritzel wirken. Des Weiteren sind mittels des Schlittens die Zahnelemente und das Ritzel vor äußeren Einflüssen, die sich auf die Zahnelemente und auf das Ritzel negativ auswirken können, geschützt. Unter äußeren Einflüssen sind beispielsweise Schmutz- und Staubpartikel sowie Feuchtigkeit zu verstehen.

Der Schlitten kann einteilig sein. Der Schlitten kann mehrteilig sein. Der Schlitten weist beispielsweise zwei Profilteile auf, die parallel zu einer Längsrichtung verlaufen und in einer Querrichtung nebeneinander und zueinander beabstandet angeordnet sind. Die Profilteile bilden zwischen sich einen Bauraum, wobei innerhalb des Bauraums das jeweilige Zahnelement und das Ritzel angeordnet sind. Das Ritzel ist beispielsweise mittels einer Welle gelagert. Die Welle kann in einem der beiden Profilteile oder in beiden Profilteilen gelagert sein.

Der Schlitten kann in einer Längsrichtung an der ersten Sitzschiene gelagert sein. Der Schlitten kann mittels wenigstens eines Lagermittels an der ersten Sitzschiene gelagert sein. Die zweite Sitzschiene kann in Längsrichtung an dem Schlitten gelagert sein. Die zweite Sitzschiene kann mittels wenigstens eines Lagermittels an dem Schlitten gelagert sein. Ein Lagermittel kann ein Gleitlager sein. Das Gleitlager kann zylinderförmig sein. Das Gleitlager kann stabförmig sein. Das Gleitlager kann aus einem Lagerwerkstoff sein. Der Lagerwerkstoff kann Kunststoff sein. Der Lagerwerkstoff kann Stahl sein. Ein Lagermittel kann ein Wälzlager sein. Das Lagermittel kann Wälzkörper aufweisen. Die Wälzkörper können in einem Wälzkörperkäfig geführt sein.

Gemäß einer weiteren Ausführungsform ist das Ritzel an dem Schlitten gelagert und jeweils in Zahneingriff mit der Verzahnung der ersten und zweiten Sitzschiene. Beispielsweise bewirkt eine Drehung des Ritzels eine Verschiebung des Schlittens relativ zu der ersten Sitzschiene in Längsrichtung. Das Ritzel kann um eine in einer Querrichtung verlaufende Achse drehbar sein. Die Drehung des Ritzels bewirkt weiterhin eine Verschiebung der zweiten Sitzschiene relativ zum Schlitten sowie zur ersten Sitzschiene in Längsrichtung. Die Verschiebung des Schlittens relativ zu der ersten Sitzschiene ist gleich groß wie eine Verschiebung der zweiten Sitzschiene relativ zum Schlitten. Ein Übersetzungsverhältnis zwischen einer Verschiebung des Schlittens relativ zu der ersten Sitzschiene und einer Verschiebung der zweiten Sitzschiene relativ zum Schlitten wird erreicht, indem das Ritzel sowohl mit der Verzahnung der ersten Sitzschiene als auch mit der Verzahnung der zweiten Sitzschiene zeitgleich in Zahneingriff ist.

In einer Weiterbildung sind beide Zahnelemente jeweils mit einem Spiel, das senkrecht zur Verstellrichtung verläuft, mit der zugehörigen ersten oder zweiten Sitzschiene verbunden. Die jeweilige Verzahnung ist beispielsweise an einer Zahnstange ausgebildet, die mit der zugehörigen Sitzschiene verbunden ist. Beispielsweise ist das jeweilige Zahnelement eine separat ausgebildete Zahnstange.

Eine weitere Ausgestaltung sieht vor, dass das jeweilige Zahnelement zu der zugehörigen Sitzschiene beabstandet angeordnet und mit dieser verbunden ist. Zum Beispiel ist ein flexibles Abstandselement zwischen dem jeweiligen Zahnelement und der zugehörigen Sitzschiene angeordnet.

Gemäß einer weiteren Ausführungsform ist das jeweilige Zahnelement mittels flexibler Abstandselemente gegenüber der zugehörigen Sitzschiene abgestützt, insbesondere federnd abgestützt. Mittels der flexiblen Abstandselemente, insbesondere flexible Kunststoffpuffer, Gummipuffer, Federn, Spiralfedern, sind die Zahnelemente, insbesondere Zahnstangen, derart federnd abgestützt, dass deren Verzahnung sicher am Ritzel eingreifen. Darüber hinaus können mittels der flexiblen Abstandselemente Fertigungstoleranzen zwischen Zahnelementen und Sitzschienen und optional zwischen Zahnelementen, Sitzschienen sowie Schlitten sicher kompensiert werden.

Eine mögliche Ausführungsform sieht vor, dass die zugehörige Sitzschiene eine Haltevorrichtung mit zumindest einem Führungsstift aufweist. Die Haltevorrichtung ist an der zugehörigen Sitzschiene befestigt und ausgebildet, das jeweilige Zahnelement relativ zu der zugehörigen Sitzschiene beweglich entlang des Spiels zu halten. Die Haltevorrichtung ist auf einer Innenseite der jeweiligen Sitzschiene befestigt, beispielsweise mit der jeweiligen Sitzschiene verschraubt und/oder vernietet und/oder verschweißt und/oder verklebt. Die Haltevorrichtung bildet eine Aufnahme für das jeweilige Zahnelement.

In einer weiteren möglichen Ausführungsform ist das jeweilige Zahnelement an der zugehörigen Haltevorrichtung gelagert und umfasst zumindest eine beispielsweise als Langloch ausgebildete Ausnehmung, in welcher der Führungsstift geführt ist. Die Ausnehmung erstreckt sich in Vertikalrichtung. Insbesondere ist die Ausnehmung als Langloch ausgebildet, wobei das Langloch insbesondere in Vertikalrichtung vergrößert ist und ausdehnend am Zahnelement ausgebildet ist. Beispielsweise ist das Spiel, insbesondere ein Bewegungsraum des Zahnelements, durch das Langloch gebildet.

Die erste Sitzschiene und/oder die zweite Sitzschiene können aus einem metallischen Werkstoff sein. Die erste Sitzschiene und/oder die zweite Sitzschiene können aus einem Aluminiumwerkstoff sein. Die erste Sitzschiene und/oder die zweite Sitzschiene können aus einem Stahlwerkstoff sein. Die erste Sitzschiene und/oder die zweite Sitzschiene können aus einem Strangpressprofil gefertigt sein. Die erste Sitzschiene und/oder die zweite Sitzschiene können gerollt sein. Die erste Sitzschiene kann die gleiche Geometrie aufweisen wie die zweite Sitzschiene. Die erste Sitzschiene und die zweite Sitzschiene können Gleichteile sein.

In einer weiteren Ausgestaltung weist die Längseinstellvorrichtung genau zwei Schienenanordnungen auf. Die beiden Schienenanordnungen können Gleichteile aufweisen oder vollständig aus Gleichteilen bestehen. Die beiden Schienenanordnungen können Bauteile aufweisen, die spiegelsymmetrisch zu einer senkrecht zur Querrichtung verlaufenden Spiegelebene sind. Die beiden Schienenanordnungen können spiegelsymmetrisch zu einer senkrecht zur Querrichtung verlaufenden Spiegelebene sein.

Die Aufgabe wird zudem gelöst durch einen Sitz mit einer zuvor beschriebenen Längseinstellvorrichtung.

Ausführungsbeispiele der Erfindung werden anhand von Zeichnungen näher erläutert. Dabei zeigen:
Figuren 1A und 1B jeweils eine schematische Seitenansicht eines Sitzes mit einer Längseinstellvorrichtung,
Figur 2 schematisch eine Längseinstellvorrichtung in einer perspektivischen Ansicht,
Figur 3A schematisch in perspektivischer Ansicht eine Schienenanordnung in einer mittleren Längseinstellposition,
Figur 3B schematisch in perspektivischer Ansicht eine gegenüber der mittleren Längseinstellposition veränderte Längseinstellposition,
Figur 4 schematisch eine Teilansicht einer Sitzschiene mit einem Zahnstangenverstellmechanismus,
Figur 5 schematisch in Seitenansicht einen Zahnstangenverstellmechanismus einer Längseinstellvorrichtung in einer maximal veränderten Längseinstellposition,
Figur 6 schematisch einen Querschnitt eines Ausführungsbeispiels einer Schienenanordnung entlang der Linie VI - VI in Fig. 1B, wobei die Schienenanordnung eine erste Sitzschiene, eine zweite Sitzschiene und einen Schlitten umfasst, und
Figur 7 schematisch einen Querschnitt einer weiteren Ausführungsform einer Schienenanordnung entlang der Linie VII - VII in Fig. 1A, wobei die Schienenanordnung eine erste Sitzschiene und eine zweite Sitzschiene umfasst.

Einander entsprechende Teile sind in allen Figuren mit den gleichen Bezugszeichen versehen.

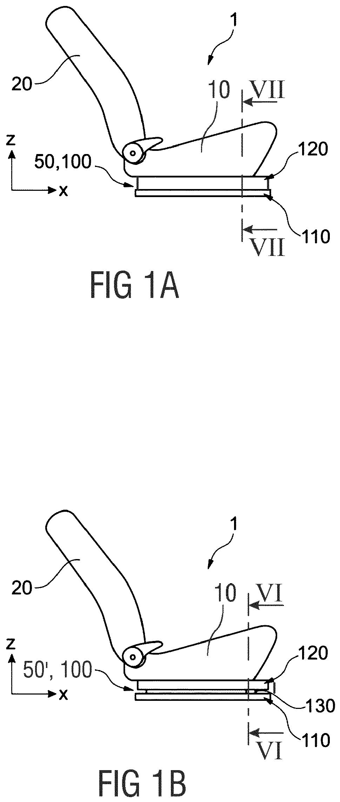

**Figuren 1A und 1B** zeigen jeweils eine schematische Seitenansicht eines Sitzes 1 mit einer Längseinstellvorrichtung 50, 50'.

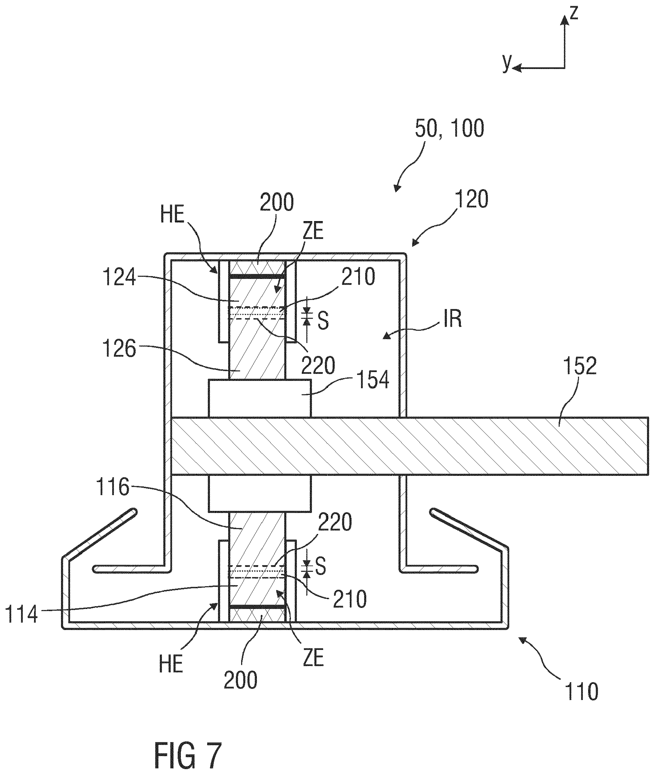

Dabei zeigt **Figur 1A** ein erstes Ausführungsbeispiel einer Längseinstellvorrichtung 50 mit einer Schienenanordnung 100. Die Schienenanordnung 100 umfasst eine erste Sitzschiene 110 und eine relativ zu der ersten Sitzschiene 110 in Längsrichtung X verschiebbaren zweiten Sitzschiene 120. Ein Querschnitt dieser Schienenanordnung 100 ist beispielsweise in Figur 7 gezeigt.

**Figur 1B** zeigt ein weiteres Ausführungsbeispiel einer Längseinstellvorrichtung 50' mit einer Schienenanordnung 100. Die Schienenanordnung 100 umfasst eine erste Sitzschiene 110 und eine relativ zu der ersten Sitzschiene 110 in Längsrichtung X verschiebbaren zweiten Sitzschiene 120. Des Weiteren umfasst die Schienenanordnung 100 einen Schlitten 130, welcher zwischen der ersten und der zweiten
Sitzschiene 110, 120 angeordnet ist. Insbesondere sind die Sitzschienen 110 und 120 in Vertikalrichtung Z durch den Schlitten 130 voneinander beabstandet angeordnet.

Der in den **Figuren 1A und 1B** schematisch dargestellte Sitz 1 mit einer Längseinstellvorrichtung 50, 50' wird nachfolgend unter Verwendung von drei senkrecht zueinander verlaufenden Raumrichtungen X, Y, Z beschrieben.

Der Sitz 1 kann als ein Flugzeugsitz für ein Flugzeug oder als ein Fahrzeugsitz für ein Fahrzeug, insbesondere Kraftfahrzeug, ausgebildet sein.

Eine Längsrichtung X verläuft bei einem im Fahrzeug eingebauten Sitz 1 weitgehend horizontal und insbesondere parallel zu einer Fahrzeuglängsrichtung, die der gewöhnlichen Fahrtrichtung des Fahrzeuges entspricht. Eine zu der Längsrichtung X senkrecht verlaufende Querrichtung Y ist im Fahrzeug ebenfalls horizontal ausgerichtet und verläuft parallel zu einer Fahrzeugquerrichtung. Eine Vertikalrichtung Z verläuft senkrecht zu der Längsrichtung X und senkrecht zu der Querrichtung Y.

Bei einem in einem Fahrzeug oder in einem Flugzeug eingebauten Sitz 1 verläuft die Vertikalrichtung Z parallel zu der Fahrzeughochachse. Die verwendeten Positions- und Richtungsangaben, wie beispielsweise vorne, hinten, oben und unten beziehen sich auf eine Blickrichtung eines im Sitz 1 sitzenden Insassen in normaler Sitzposition, wobei der Sitz 1 in einem Fahrzeug oder in einem Flugzeug eingebaut, in einer zur Personenbeförderung geeigneten Gebrauchsposition mit aufrecht stehender Rückenlehne 20 und wie üblich in Fahrtrichtung beziehungsweise Flugrichtung ausgerichtet ist.

Der Sitz 1 kann jedoch auch in abweichender Ausrichtung, beispielsweise quer zur Fahrtrichtung beziehungsweise zur Flugrichtung verbaut werden. Der in **Figuren 1A und 1B** schematisch dargestellte Sitz 1 weist ein Sitzteil 10 und die Rückenlehne 20 auf. Der Sitz 1 weist für eine Änderung der Sitzlängsposition die Längseinstellvorrichtung 50, 50' auf, die unterhalb des Sitzteils 10 angeordnet ist. Mittels der Längseinstellvorrichtung 50, 50' lässt sich das Sitzteil 10, insbesondere weitgehend der gesamte Sitz 1, parallel zur Längsrichtung X verschieben.

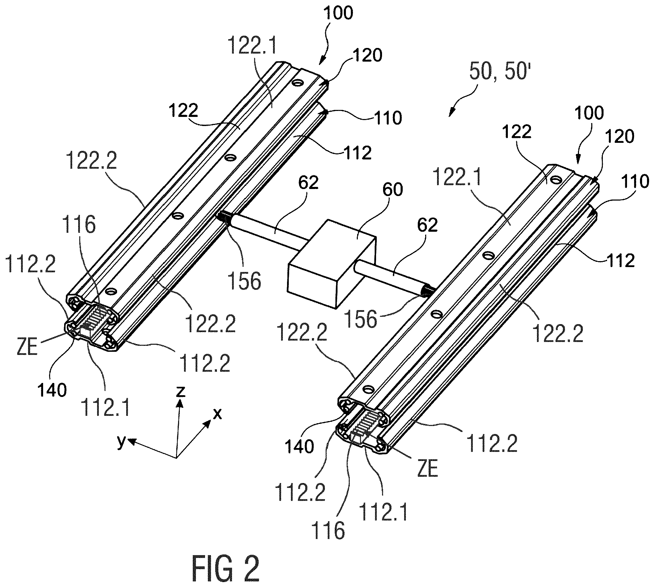

Ein in **Figur 2** gezeigter Elektromotor 60 dient einem Antrieb der Längseinstellvorrichtung 50, 50'. Die Längseinstellvorrichtung 50, 50' weist, in Querrichtung Y betrachtet, auf beiden Seiten des Sitzes 1 jeweils eine Schienenanordnung 100 auf. Der Elektromotor 60 ist in Querrichtung Y betrachtet zwischen den beiden Schienenanordnungen 100 angeordnet. Der Elektromotor 60 weist beidseitig weitgehend parallel zur Querrichtung Y ausgerichtete Wellen, wie zum Beispiel Flexwellen 62, zur Verbindung des Elektromotors 60 mit den beiden Schienenanordnungen 100 auf.

**Figur 2** zeigt eine Ausführungsform für eine Längseinstellvorrichtung 50, 50'.

Wie in **Figur 2** erkennbar, sind die beiden Schienenanordnungen 100 weitgehend, vorliegend vollständig, spiegelsymmetrisch aufgebaut, so dass nachfolgend, soweit nicht abweichend beschrieben, nur eine der beiden Schienenanordnungen 100 beschrieben ist.

Jede Schienenanordnung 100 weist jeweils eine erste Sitzschiene 110 und eine relativ zu der ersten Sitzschiene 110 verschiebbar gelagerte zweite Sitzschiene 120 auf.

Die erste Sitzschiene 110 ist mit einer Fahrzeugstruktur, insbesondere einem Fahrzeugboden, oder einer Flugzeugstruktur, insbesondere einem Boden eines Flugzeugs, verbindbar.

Die zweite Sitzschiene 120 ist mit einer Struktur des Sitzes 1, beispielsweise einer Struktur des Sitzteils 10 verbindbar.

Die erste Sitzschiene 110 weist ein erstes Schienenprofil 112 und ein erstes Zahnelement ZE, insbesondere eine erste Zahnstange 114, mit einer ersten Verzahnung 116 auf. Das erste Schienenprofil 112 weist einen weitgehend C-förmigen Querschnitt auf und verläuft mit weitgehend konstantem Querschnitt in Längsrichtung X. Von einem Steg 112.1 des ersten Schienenprofils 112 stehen beidseitig zwei Flansche 112.2 nach oben ab. Jeweils ein Endbereich eines jeden Flansches 112.2 ist in Richtung des gegenüberliegenden Flansches 112.2 abgewinkelt.

Im Bereich der beiden Flansche 112.2 sind jeweils Führungsgeometrien zur Aufnahme von jeweils zwei Lagermitteln 140, vorliegend zylinderförmige Gleitlager, ausgebildet.

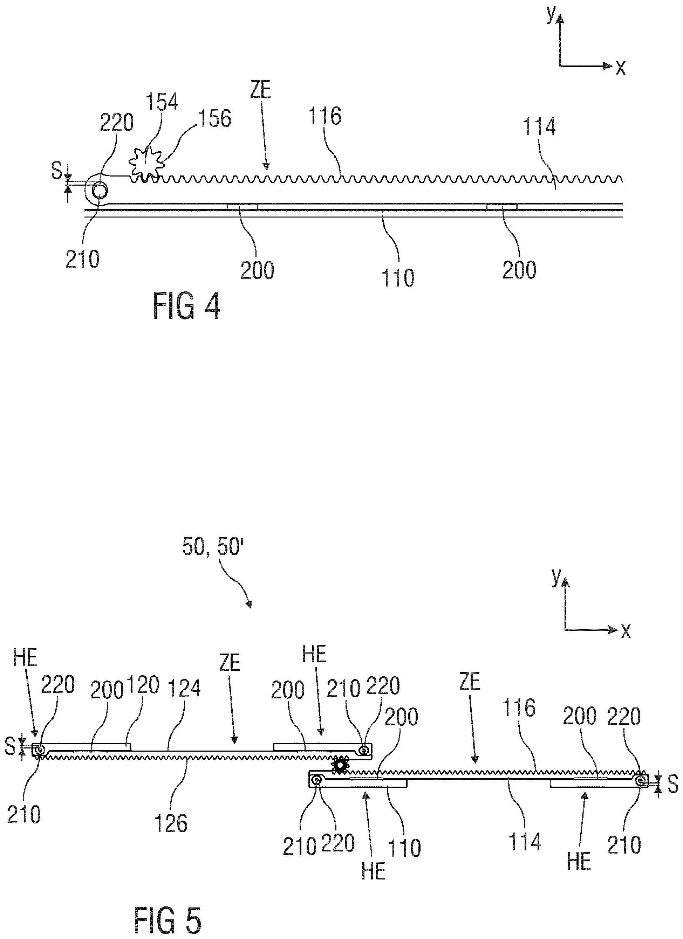

Die zweite Sitzschiene 120 weist ein zweites Schienenprofil 122 und ein zweites Zahnelement ZE, insbesondere eine zweite Zahnstange 124, mit einer zweiten Verzahnung 126 auf. Beispielsweise ist das zweite Zahnelement ZE, insbesondere die zweite Zahnstange 124, mit der zweiten Verzahnung 126 in den **Figuren 5 bis 7** näher dargestellt. Das zweite Schienenprofil 122 weist einen weitgehend C-förmigen Querschnitt auf und verläuft mit weitgehend konstantem Querschnitt in Längsrichtung X. Von einem Steg 122.1 des zweiten Schienenprofils 122 stehen beidseitig zwei Flansche 122.2 nach unten ab. Jeweils ein Endbereich eines jeden Flansches 122.2 ist in Richtung des gegenüberliegenden Flansches 122.2 abgewinkelt.

Im Bereich der beiden Flansche 122.2 sind jeweils Führungsgeometrien zur Aufnahme von jeweils zwei Lagermitteln 140, vorliegend zylinderförmige Gleitlager, ausgebildet.

Die erste Sitzschiene 110 und die zweite Sitzschiene 120 verlaufen parallel zur Längsrichtung X.

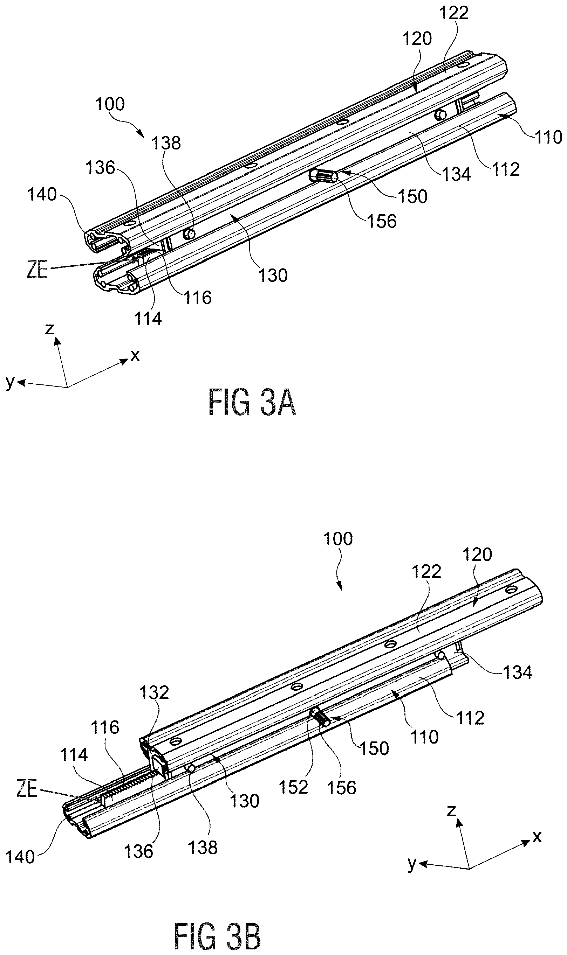

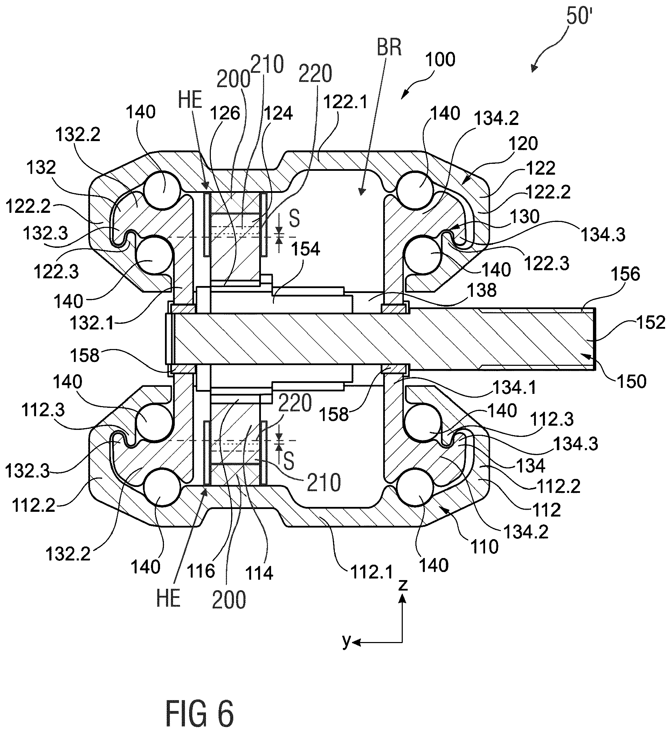

Wie in **Figuren 3A**, **3B** **und** **6** erkennbar, sind die beiden Sitzschienen 110, 120 spiegelsymmetrisch zu einer senkrecht zur Vertikalrichtung Z verlaufenden Spiegelebene.

Vorliegend sind die beiden Sitzschienen 110, 120 Gleichteile, wobei sich die Spiegelsymmetrie dadurch ergibt, dass die erste Sitzschiene 110 um 180 Grad um die Querrichtung Y gedreht zu der zweiten Sitzschiene 120 angeordnet ist. Die beiden Sitzschienen 110, 120 sind in Vertikalrichtung Z betrachtet zueinander beabstandet angeordnet.

Jede Schienenanordnung 100 weist dabei jeweils eine erste Sitzschiene 110, einen relativ zu der ersten Sitzschiene 110 verschiebbar gelagerten Schlitten 130 und eine relativ zu dem Schlitten 130 und relativ zu der ersten Sitzschiene 110 verschiebbar gelagerte zweite Sitzschiene 120 auf.

**Figur 3A** zeigt schematisch in perspektivischer Ansicht eine der Schienenanordnungen 100 in einer mittleren Längseinstellposition.

**Figur 3B** zeigt schematisch in perspektivischer Ansicht eine der Schienenanordnungen 100 in einer gegenüber der mittleren Längseinstellposition veränderten Längseinstellposition.

Der Schlitten 130 weist zwei Profilteile 132, 134 auf, die parallel zur Längsrichtung X verlaufen, wobei in den **Figuren 3A und 3B** jeweils eines der Profilteile 134 gezeigt ist und in **Figur 6** beide Profilteile 132, 134 dargestellt sind. Die beiden Profilteile 132, 134 sind spiegelsymmetrisch zu einer senkrecht zur Querrichtung Y verlaufenden Spiegelebene angeordnet. Vorliegend sind die beiden Profilteile 132, 134 Gleichteile, wobei sich die Spiegelsymmetrie dadurch ergibt, dass ein erstes Profilteil 132 um 180 Grad um die Vertikalrichtung Z gedreht zu einem zweiten Profilteil 134 angeordnet ist.

Die beiden Profilteile 132, 134 können in Querrichtung Y betrachtet zueinander beabstandet angeordnet und beispielsweise mittels Distanzstücke 136 und Nietbolzen 138 miteinander verbunden sein. Im Bereich von Flanschen sind jeweils Führungsgeometrien zur Aufnahme von Lagermitteln ausgebildet. Insbesondere bilden die Profilteile 132, 134 zwischen sich einen Bauraum BR, wobei innerhalb des Bauraums BR das jeweilige Zahnelement ZE, insbesondere die jeweilige Zahnstange 114, 124, und das Ritzel 154 angeordnet sind.

Dabei sind die erste Sitzschiene 110 relativ zu dem Schlitten 130 verschiebbar gelagert und der Schlitten 130 relativ zu der zweiten Sitzschiene 120 verschiebbar gelagert.

Die Anordnung der nachfolgend beschriebenen Einzelteile der Schienenanordnung 100 ist insbesondere in **Figur 6** dargestellt.

Die beiden Profilteile 132, 134 nehmen zwischen sich zwei Zahnstangen 114, 124 auf. Die jeweilige Zahnstange 114, 124 ist zu der zugehörigen ersten oder zweiten Sitzschiene 110, 120 beabstandet angeordnet und mit dieser verbunden. Zum Beispiel ist ein flexibles Abstandselement 200 zwischen der jeweiligen Zahnstange 114, 124 und der zugehörigen ersten oder zweiten Sitzschiene 110, 120 angeordnet.

Ein erstes Profilteil 132 weist einen weitgehend C-förmigen Querschnitt auf und verläuft mit weitgehend konstantem Querschnitt in Längsrichtung X. Von einem Steg 132.1 des ersten Profilteils 132 stehen beidseitig zwei Flansche 132.2 parallel zur Querrichtung Y ab. Jeweils ein Endbereich eines jeden Flansches 132.2 weist eine Lippe 132.3 auf. Im Bereich der beiden Flansche 132.2 sind jeweils Führungsgeometrien zur Aufnahme von jeweils zwei der Lagermittel 140 ausgebildet. Von jedem Flansch 132.2 steht eine Lippe 132.3 ab. Die beiden Lippen 132.3 weisen aufeinander zu.

Ein zweites Profilteil 134 weist einen weitgehend C-förmigen Querschnitt auf und verläuft mit weitgehend konstantem Querschnitt in Längsrichtung X. Von einem Steg 134.1 des zweiten Profilteils 134 stehen beidseitig zwei Flansche 134.2 parallel zur Querrichtung Y ab. Die Flansche 132.2 des ersten Profilteils 132 und die Flansche 134.2 des zweiten Profilteils 134 weisen voneinander weg. Im Bereich der beiden Flansche 134.2 sind jeweils Führungsgeometrien zur Aufnahme von jeweils zwei der Lagermittel 140 ausgebildet. Von jedem Flansch 134.2 steht eine Lippe 134.3 ab. Die beiden Lippen 134.3 weisen aufeinander zu.

Die Lagermittel 140 sind im Bereich der Flansche 112.2, 122.2, 132.2, 134.2 derart angeordnet, und die Lippen 112.3, 122.3, 132.3, 134.3 hintergreifen einander derart, dass die erste Sitzschiene 110 relativ zu dem Schlitten 130 verschiebbar gelagert ist, und der Schlitten 130 relativ zu der zweiten Sitzschiene 120 verschiebbar gelagert ist. Die beiden Profilteile 132, 134 nehmen zwischen sich die beiden Zahnstangen 114, 124 auf.

Eine Antriebswelle 150 weist eine Welle 152 und ein mit der Welle 152 verbundenes Ritzel 154 auf. Die Welle 152 ist beispielsweise mittels Lagerbuchsen 158 in den Profilteilen 132, 134 des Schlittens 130 gelagert, vorliegend parallel zur Querrichtung Y. Das Ritzel 154 ist zwischen den Profilteilen 132, 134 angeordnet. Das Ritzel 154 ist sowohl mit der ersten Verzahnung 116 der ersten Zahnstange 114 als auch mit der zweiten Verzahnung 126 der zweiten Zahnstange 124 in Zahneingriff. Ein Wellenende der Welle 152 ragt durch das dem Elektromotor 60 zugewandte Profilteil 134 in Richtung des Elektromotors 60 und trägt eine Außenverzahnung 156 zur Verbindung der Antriebswelle 150 mit der in **Figur 2** dargestellten Flexwelle 62.

Eine Betätigung des Elektromotors 60 bewirkt eine Drehung des Ritzels 154. Eine Drehung des Ritzels 154 bewirkt, dass sich die erste Zahnstange 114 und somit das erste Schienenprofil 112 relativ zu dem Schlitten 130 bewegt. Die Drehung des Ritzels 154 bewirkt zudem, dass sich die zweite Zahnstange 124 und somit das zweite Schienenprofil 122 relativ zu dem Schlitten 130 bewegt. Dadurch, dass sich das Ritzel 154 mit beiden Verzahnungen 116, 126 der Zahnstangen 114, 124 in Zahneingriff befindet, bewegen sich die Schienenprofile 112, 122 gegenläufig zueinander.

Zudem bewegen sich die Schienenprofile 112, 122 relativ zueinander mit der doppelten Relativgeschwindigkeit, im Vergleich zur Relativgeschwindigkeit zwischen dem Schlitten 130 und jeweils einem der Schienenprofile 112, 122. Gleiches gilt entsprechend für die relative Verschiebung zwischen den Schienenprofilen 112, 122 im Vergleich zu den jeweils relativen Verschiebungen der Schienenprofile 112, 122 jeweils zum Schlitten 130.

**Figur 4** zeigt eine der Zahnstangen 114 mit der Verzahnung 116 in vergrößerter Darstellung. Insbesondere zeigt **Figur 4** schematisch eine Teilansicht einer Sitzschiene 110 mit einem Zahnstangenverstellmechanismus.

**Figur 5** zeigt schematisch in Seitenansicht einen Zahnstangenverstellmechanismus einer Längseinstellvorrichtung 50, 50' in einer maximal veränderten Längseinstellposition.

Dabei ist die Zahnstange 114 mit einem Spiel S, das senkrecht zur Verstellrichtung und zur Längsrichtung X verläuft, an der zugehörigen Sitzschiene 110 befestigt. Darüber hinaus ist die Zahnstange 114 mittels flexibler Abstandselemente 200 gegenüber diesen abgestützt, insbesondere federnd abgestützt.

Die Zahnstange 124 mit der Verzahnung 126 ist analog mit einem Spiel S an der zugehörigen Sitzschiene 120 befestigt und mittels flexibler Abstandselemente 200 federnd an dieser abgestützt. Hierzu weist die betreffende Sitzschiene 110 oder 120 beispielsweise einen abstehenden Führungsstift 210 auf, welcher in eine als Langloch ausgebildete Ausnehmung 220 mit dem Spiel S geführt ist.

Beispielsweise ist das Abstandselement 200 derart ausgebildet, dass die jeweilige Zahnstange 114, 124 in Vertikalrichtung X jeweils in Richtung des Ritzels 154 drückt. Im Fall der unteren Zahnstange 114 ist der Führungsstift 210 gegen einen oberen Rand der Ausnehmung 220 gedrückt, wobei das Spiel S unterhalb des Führungsstiftes 210 gebildet ist. Im Fall der oberen Zahnstange 124 ist der Führungsstift 210 gegen einen unteren Rand der Ausnehmung 220 gedrückt, wobei das Spiel S oberhalb des Führungsstiftes 210 gebildet ist.

Des Weiteren ist das Abstandselement 200 ausgebildet, bei einer Krafteinwirkung nachzugeben, sodass sich die jeweilige Zahnstange 114, 124 im Rahmen des Spiels S bewegen kann, um beispielsweise Fertigungstoleranzen auszugleichen.

Die zugehörige Sitzschiene 110, 120 umfasst jeweils eine Anzahl von Haltevorrichtungen HE mit jeweils zumindest einem Führungsstift 210. Die Haltevorrichtung HE ist an der zugehörigen Sitzschiene 110, 120 befestigt und ausgebildet, die jeweilige Zahnstange 114, 124 relativ zu der zugehörigen ersten oder zweiten Sitzschiene 110, 120 beweglich entlang des Spiels S zu halten. Die Haltevorrichtung HE ist auf einer Innenseite der jeweiligen Sitzschiene 110, 120 befestigt, beispielsweise ist die Haltevorrichtung HE mit der jeweiligen Sitzschiene 110, 120 verschraubt und/oder vernietet und/oder verschweißt und/oder verklebt. Die Haltevorrichtung HE bildet eine Aufnahme für die jeweilige Zahnstange 114, 124.

Insbesondere ist die jeweilige Zahnstange 114, 124 an der zugehörigen Haltevorrichtung HE gelagert und umfasst zumindest eine als Langloch ausgebildete Ausnehmung 220, in welcher der Führungsstift 210 weitestgehend beweglich geführt ist. Das Langloch ist insbesondere in Vertikalrichtung Z ausdehnend an der jeweiligen Zahnstange 114, 124 ausgebildet. Der Führungsstift 210 ist beweglich im Langloch angeordnet. Insbesondere kann sich der Führungsstift 210 innerhalb des Spiels S bewegen lassen.

Die Abstandselemente 200 sind beispielsweise als flexible Kunststoffpuffer, Gummipuffer, Federn oder Spiralfedern ausgebildet, stützen die Zahnstangen 114 oder 124 federnd ab, so dass deren Verzahnungen 116 bzw. 126 sicher am Ritzel 154 eingreifen. Darüber hinaus können mittels der flexiblen Abstandselemente 200 Fertigungstoleranzen zwischen Zahnstangen 114, 124 und Sitzschienen 110, 120 sowie Profilteilen 132, 134 sicher kompensiert werden.

**Figur 7** zeigt schematisch einen Querschnitt einer weiteren Ausführungsform einer Schienenanordnung 100 ohne Schlitten 130, wobei die Schienenanordnung 100 eine erste Sitzschiene 110 und eine zweite Sitzschiene 120 umfasst.

Die Schienenanordnung 100 umfasst eine sitzfeste zweite Sitzschiene 120 und eine fahrzeugfeste erste Sitzschiene 110.

Die erste Sitzschiene 110 und die zweite Sitzschiene 120 sind jeweils als eine Unter- und Oberschiene der Schienenanordnung 100 ausgebildet. Hierbei bildet die erste Sitzschiene 110 eine Führungsschiene für die zweite Sitzschiene 120, die als linear in Längsrichtung X bewegliche Schiene ausgebildet ist.

Die Sitzschienen 110, 120 sind derart zueinander angeordnet, dass beide Sitzschienen 110, 120 ein Schienenprofil mit einem Innenraum IR bilden und relativ zueinander in Längsrichtung X verschiebbar und beweglich sind. Dabei umgreifen die beiden Sitzschienen 110, 120 einander wechselseitig mit ihren im Wesentlichen U-förmigen Profilen unter Bildung des Schienenprofils und des Innenraumes IR.

Die zweite Sitzschiene 120 weist im geöffneten Profil an zwei sich gegenüberliegenden Schenkeln einen nach außen gewölbten Rand auf. Die erste Sitzschiene 110 weist hierzu korrespondierend an zwei gegenüberliegenden Schenkeln einen nach innen gewölbten Rand auf. Die Sitzschienen 110, 120 sind so ineinander geschoben, dass sie mit ihren seitlich gewölbten Rändern einander hintergreifen.

In diesen Randbereichen der Sitzschienen 110, 120 sind zur Verringerung einer Reibung zwischen den beiden Sitzschienen 110, 120 beispielsweise Wälzkörper oder ein anderes geeignetes Lagermittel bzw. Gleitlager angeordnet.

Die erste Sitzschiene 110 und zweite Sitzschiene 120 weisen jeweils ein Zahnelement ZE mit einer Verzahnung 116, 126 auf, wobei die Zahnelemente ZE über zumindest ein antreibbares Ritzel 154 relativ zueinander beweglich, insbesondere verschiebbar, gekoppelt sind. Die jeweiligen Zahnelemente ZE sind insbesondere als miteinander korrespondierende Zahnstangen 114, 124 ausgebildet.

Des Weiteren sind die Zahnelemente ZE jeweils mit einem Spiel S, das senkrecht zur Verstellrichtung verläuft, mit der zugehörigen ersten oder zweiten Sitzschiene 110, 120 verbunden. Insbesondere ist das jeweilige Zahnelement ZE an der zugehörigen ersten oder zweiten
Sitzschiene 110, 120 relativ zu dieser beweglich befestigt. Dabei sind die Zahnelemente ZE und das Ritzel 154 jeweils im Innenraum IR des Schienenprofils angeordnet.

Beispielsweise ist das Ritzel 154 an der zweiten Sitzschiene 120 gelagert. Das Ritzel 154 ist mit einer Welle 152 verbunden. Die Welle 152 ist Teil einer Antriebswelle 150, wie in **Figur 2** gezeigt. Eine Drehung des Ritzels 154 bewirkt eine Längsverstellung der zweiten Sitzschiene 120 relativ zu der ersten Sitzschiene 110. Mit anderen Worten: eine Drehung des Ritzels 154 bewirkt eine Verschiebung der zweiten Sitzschiene 120 relativ zu der ersten Sitzschiene 110 in Längsrichtung X.

Mittels einer Haltevorrichtung HE ist das jeweilige Zahnelement ZE zu der zugehörigen Sitzschiene beabstandet angeordnet und mit dieser verbunden. Zum Beispiel ist ein flexibles Abstandselement 200 zwischen dem jeweiligen Zahnelement ZE und der zugehörigen Sitzschiene 110, 120 angeordnet.

Insbesondere ist das jeweilige Zahnelement ZE mittels eines flexiblen Abstandselements 200 gegenüber der zugehörigen Sitzschiene 110, 120 und dem Ritzel 154 abgestützt, insbesondere federnd abgestützt.

### Bezugszeichenliste

- 1: Sitz
- 10: Sitzteil
- 20: Rückenlehne
- 50, 50': Längseinstellvorrichtung
- 60: Elektromotor
- 62: Flexwelle

- 100: Schienenanordnung
- 110: erste Sitzschiene
- 112: erstes Schienenprofil
- 112.1: Steg
- 112.2: Flansch
- 112.3: Lippe
- 114: erste Zahnstange
- 116: erste Verzahnung
- 120: zweite Sitzschiene
- 122: zweites Schienenprofil
- 122.1: Steg
- 122.2: Flansch
- 122.3: Lippe
- 124: zweite Zahnstange
- 126: zweite Verzahnung
- 130: Schlitten
- 132: Profilteil
- 132.1: Steg
- 132.2: Flansch
- 132.3: Lippe
- 134: Profilteil
- 134.1: Steg
- 134.2: Flansch
- 134.3: Lippe
- 136: Distanzstück
- 138: Nietbolzen
- 140: Lagermittel
- 150: Antriebswelle
- 152: Welle
- 154: Ritzel
- 156: Außenverzahnung
- 158: Lagerbuchse
- 200: Abstandselement
- 210: Führungsstift
- 220: Ausnehmung

- BR: Bauraum
- HE: Haltevorrichtung
- IR: Innenraum
- ZE: Zahnelement

- S: Spiel
- X: Längsrichtung
- Y: Querrichtung
- Z: Vertikalrichtung

## Patentansprüche

1. Längseinstellvorrichtung (50) für einen Sitz (1), insbesondere Flugzeugsitz, umfassend
- wenigstens eine Schienenanordnung (100) mit einer ersten Sitzschiene (110) und
- einer relativ zu der ersten Sitzschiene (110) verschiebbar gelagerten zweiten Sitzschiene (120),
wobei die erste Sitzschiene (110) und zweite Sitzschiene (120) jeweils ein Zahnelement (ZE) mit einer Verzahnung (116, 126) aufweisen, die über zumindest ein antreibbares Ritzel (154) relativ zueinander beweglich gekoppelt sind,
wobei zumindest eines der Zahnelemente (ZE) mit einem Spiel (S), das senkrecht zur Längsrichtung (X) verläuft, mit der zugehörigen ersten oder zweiten Sitzschiene (110, 120) verbunden ist.

2. Längseinstellvorrichtung (50') für einen Sitz (1), insbesondere Flugzeugsitz, umfassend
- wenigstens eine Schienenanordnung (100) mit einer ersten Sitzschiene (110),
- einer relativ zu der ersten Sitzschiene (110) verschiebbar gelagerten und in Vertikalrichtung zu dieser beabstandeten zweiten Sitzschiene (120) und
- einem zwischen der ersten und zweiten Sitzschiene (110, 120) angeordneten Schlitten (130),
wobei die erste Sitzschiene (110) und zweite Sitzschiene (120) jeweils ein Zahnelement (ZE) mit einer Verzahnung (116, 126) aufweisen, die über ein antreibbares Ritzel (154) relativ zueinander beweglich gekoppelt sind,
wobei zumindest eines der Zahnelemente (ZE) mit einem Spiel (S), das senkrecht zur Längsrichtung (X) verläuft, mit der zugehörigen ersten oder zweiten Sitzschiene (110, 120) verbunden ist.

3. Längseinstellvorrichtung (50) nach Anspruch 1 oder 2, wobei die Sitzschienen (110, 120) ein Schienenprofil mit einem Innenraum (IR) bilden, in welchem das jeweilige Zahnelement (ZE) und das Ritzel (154) angeordnet sind.

4. Längseinstellvorrichtung (50, 50') nach einem der vorhergehenden Ansprüche, wobei das zumindest eine Zahnelement (ZE) zu der zugehörigen Sitzschiene (110, 120) beabstandet angeordnet und mit dieser verbunden ist.

5. Längseinstellvorrichtung (50, 50') nach einem der vorhergehenden Ansprüche, wobei zumindest ein flexibles Abstandselement (200) zwischen dem zumindest einen Zahnelement (ZE) und der zugehörigen Sitzschiene (110, 120) angeordnet ist.

6. Längseinstellvorrichtung (50, 50') nach Anspruch 5, wobei das Abstandselement (200) als ein Pufferelement oder Federelement ausgebildet ist.

7. Längseinstellvorrichtung (50, 50') nach einem der vorhergehenden Ansprüche, wobei die zugehörige Sitzschiene (110, 120) eine Haltevorrichtung (HE) mit zumindest einem Führungsstift (210) umfasst.

8. Längseinstellvorrichtung (50, 50') nach Anspruch 7, wobei das zumindest eine Zahnelement (ZE) an der Haltevorrichtung (HE) gelagert ist und zumindest eine Ausnehmung (220) umfasst, in welcher der Führungsstift (210) geführt ist.

9. Längseinstellvorrichtung (50') nach Anspruch 2, wobei der Schlitten (130) zwei Profilteile (132, 134) aufweist, die parallel zu einer Längsrichtung (X) verlaufen und in einer Querrichtung (Y) nebeneinander und zueinander beabstandet angeordnet sind und zwischen sich einen Bauraum (BR) bilden, wobei innerhalb des Bauraums (BR) das jeweilige Zahnelement (ZE) und das Ritzel (154) angeordnet sind.

10. Sitz (1), insbesondere Flugzeugsitz, umfassend eine Längseinstellvorrichtung (50, 50') nach wenigstens einem der Ansprüche 1 bis 9.
